(19) Europäisches Patentamt
European Patent Office
Office européen des brevets

(11) **EP 2 423 258 B1**

(12) **EUROPEAN PATENT SPECIFICATION**

(45) Date of publication and mention
of the grant of the patent:
**16.01.2013  Bulletin 2013/03**

(51) Int Cl.:
***C08L 27/06*** (2006.01)     ***C08K 3/10*** (2006.01)
***C08L 29/04*** (2006.01)

(21) Application number: **11008735.0**

(22) Date of filing: **15.06.2009**

(54) **Polyvinyl chloride resin composition and method for producing the same**

Polyvinylchloridharzzusammensetzung und Verfahren zu deren Herstellung

Composition de résine de chlorure de polyvinyle et procédé de production de celle-ci

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.06.2008  JP 2008156198**
**08.09.2008  JP 2008229553**

(43) Date of publication of application:
**29.02.2012  Bulletin 2012/09**

(62) Document number(s) of the earlier application(s) in accordance with Art. 76 EPC:
**09766627.5 / 2 289 995**

(73) Proprietor: **Kuraray Co., Ltd.**
**Okayama 710-0801 (JP)**

(72) Inventors:
• **Kato, Masaki**
**Tainai-shi**
**Niigata 9592691 (JP)**
• **Tsuboi, Akira**
**Kurashiki-shi**
**Okayama 7138550 (JP)**
• **Nii, Shinsuke**
**Kurashiki-shi**
**Okayama 7138550 (JP)**
• **Nakamae, Masato**
**Kurashiki-shi**
**Okayama 7138550 (JP)**

(74) Representative: **Müller-Boré & Partner**
**Patentanwälte**
**Grafinger Straße 2**
**81671 München (DE)**

(56) References cited:
**US-A- 4 963 608**

• **IKEDA H ET AL: "DIPSERSIBILITY OF MACROMOLECULAR POLYOLS AS CO-STABILIZER IN POLY(VINYL CHLORIDE) AND THEIR STABILIZATION EFFECT COMBINED WITH SYNERGETIC METAL SOAP", POLYMERS AND POLYMER COMPOSITES, RAPRA TECHNOLOGY, vol. 11, no. 8, 1 January 2003 (2003-01-01), pages 649-662, XP009121728, ISSN: 0967-3911**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a polyvinyl chloride resin composition preferably used in applications for foods, medical use and household goods, and to describe further, relates to a polyvinyl chloride resin composition that is good in thermal stability and is less colored.

BACKGROUND ART

Polyvinyl chloride resins have properties excellent in mechanical strength, flame retardancy, weather resistance, chemical resistance, and the like, and shaped articles thereof are widely used for general use and further in various usages, such as foods and medical use. However, since they used to have a disadvantage of causing thermal decomposition mainly of dehydrochlorination when processed for thermoformaing, shaped articles thus obtained used to have a problem, such as a decrease in mechanical properties or deterioration in color tone. To solve such problems, employed is a method of blending an organic metal salt, such as various metal soap, organic tin compounds, lead salt compounds, and organic phosphite, as a stabilizer in the polyvinyl chloride resin. Among these organic metal salts, nontoxic stabilizers, such as calcium-zinc-based stabilizers and barium-zinc-based stabilizers, are particularly used often for the excellent initial thermal stability.

However, such a calcium-zinc-based stabilizer have abilities still insufficient to inhibit heat deterioration of the polyvinyl chloride resins and does not have sufficient long term thermal stability at high temperature, so that used to have problems, such as impairing initial colorability of the shaped articles and causing blackening. Therefore, as a means for improvement of these disadvantages, polyvinyl chloride resin compositions are proposed to which an antioxidant is added or a compound having a hydroxyl group is added.

Patent Document 1 (JP 50-92947A) discloses a method of adding calcium soap, zinc soap, polyol or a derivative thereof, and a neutral inorganic calcium salt to a chloride-containing resin.

Patent Document 2 (JP 54-81359A) discloses a method of adding a water soluble polymer to a chloride-containing polymer.

Patent Document 3 (JP 57-147552A) discloses a method of adding a condensation reaction product of dipentaerythritol and dicarboxylic acid, zinc oxide, zinc carbonate or fatty acid zinc, and hydrotalcite to a chloride-containing resin.

Patent Document 4 (JP 60-238345A) discloses a method of adding a saponified product of an ethylene-vinyl acetate copolymer, having an ethylene unit content of from 20 to 50% and having a degree of saponification of a vinyl acetate unit of 96% or more, and a hydrotalcite-based compound to a thermoplastic resin.

Patent Document 5 (JP 1-178543A) discloses a method of adding metal soap and a saponified product of an ethylene-vinyl acetate copolymer having a copolymer composition that has an ethylene content of from 20 to 75 mol% and has a degree of saponification of a vinyl acetate portion of 50 mol% or more to a halogen-containing thermoplastic resin.

Patent Document 6 (JP 6-287387A) discloses a method of adding a metal salt of an organic acid and acetalized polyvinyl alcohol to a vinyl chloride-based resin.

Patent Document 7 (JP 9-3286A) discloses a method of adding partially saponified polyvinyl alcohol having a degree of saponification of from 70 to 95 mol%, having an average degree of polymerization of from 300 to 2000, and having a terminal mercapto group to a vinyl chloride-based resin.

Patent Document 8 (JP 9-31281A) discloses a method of adding a zinc compound, hydrotalcites, polyvinyl alcohol, and polymethyl methacrylate to a vinyl chloride-based resin.

Non-Patent Document 1 (Japanese Journal of Polymer Science and Technology Vol. 47, No. 3, 197 (1990)) discloses a method of adding zinc stearate-calcium stearate complex soap and completely saponified polyvinyl alcohol having a degree of polymerization of 600 or more to polyvinyl chloride.

Non-Patent Document 2 (Japanese Journal of Polymer Science and Technology Vol. 47, No. 6, 509 (1990)) discloses a method of adding zinc stearate-calcium stearate complex soap and partially saponified polyvinyl alcohol having a degree of polymerization of 500 and having a degree of saponification of 73.6 mol% to polyvinyl chloride.

Non-Patent Document 3 (Japanese Journal of Polymer Science and Technology Vol. 50, No. 2, 65 (1993)) discloses a method of adding zinc stearate-calcium stearate complex soap and an ethylene-vinyl alcohol copolymer having an ethylene content of 29 mol% or more to polyvinyl chloride.

Non-Patent Document 4 (Polymers & Polymer Composites, Vol. 11, 649 (2003)) discloses a method of adding zinc stearate-calcium stearate complex soap, and polyvinyl alcohol having a degree of polymerization of 500 and having a degree of saponification of 98.5 mol% or an ethylene-vinyl alcohol copolymer having an ethylene content of 29 mol% or more to polyvinyl chloride.

Non-Patent Document 5 (Journal of the Adhesion Society of Japan Vol. 43, No. 2, 43 (2007)) discloses a method of adding polyvinyl alcohol having a degree of polymerization of 500 and having a degree of saponification of 88 mol% or polyvinyl alcohol having a degree of polymerization of 1700 and having a degree of saponification of 78 mol% or more, and polymethyl methacrylate to polyvinyl chloride.

However, the polyvinyl chloride resin compositions described in Patent Documents 1 through 8 and Non-Patent Documents 1 through 5 have problems of not being sufficient in the long term thermal stability and of being colored.

PRIOR ART DOCUMENTS

Patent Documents

Patent Document 1: JP 50-92947A
Patent Document 2: JP 54-81359A
Patent Document 3: JP 57-147552A
Patent Document 4: JP 60-238345A
Patent Document 5: JP 1-178543A
Patent Document 6: JP 6-287387A
Patent Document 7: JP 9-3286A
Patent Document 8: JP 9-31281A

Non-Patent Documents

Non-Patent Document 1: Japanese Journal of Polymer Science and Technology Vol. 47, No. 3, 197 (1990)
Non-Patent Document 2: Japanese Journal of Polymer Science and Technology Vol. 47, No. 6, 509 (1990)
Non-Patent Document 3: Japanese Journal of Polymer Science and Technology Vol. 50, No. 2, 65 (1993)
Non-Patent Document 4: Polymers & Polymer Composites, Vol. 11, 649 (2003)
Non-Patent Document 5: Journal of the Adhesion Society of Japan Vol. 43, No. 2, 43 (2007)

SUMMARY OF THE INVENTION

PROBLEMS TO BE SOLVED BY THE INVENTION

It is an object of the present invention to provide a vinyl chloride resin composition that is excellent in thermal stability while being shaped and with which a less colored shaped article can be obtained.

MEANS FOR SOLVING THE PROBLEMS

They have found that it is possible to keep sufficient thermal stability while being shaped and make a less colored shaped article thereof by blending a specific amount of a vinyl alcohol-based polymer containing from 0.5 to 18 mol% of an ethylene unit and having a degree of saponification of a vinyl acetate unit of from 30 to 99.9 mol% to a polyvinyl chloride resin also in a case of adding a stabilizer of a zinc compound to the polyvinyl chloride resin composition, and thus have come to complete a second invention.

That is, the invention is a polyvinyl chloride resin composition comprising: from 0.005 to 5 parts by weight of a vinyl alcohol-based polymer containing from 0.5 to 18 mol% of an ethylene unit and having a degree of saponification of a vinyl acetate unit of from 30 to 99.9 mol%; and from 0.01 to 5 parts by weight of a zinc compound, based on 100 parts by weight of a polyvinyl chloride resin.

At this time, it is preferred that the vinyl alcohol-based polymer and the zinc compound are contained therein by adding them to the polyvinyl chloride resin.

In the invention, it is preferred to further comprise from 0.001 to 10 parts by weight of a lubricant based on 100 parts by weight of the polyvinyl chloride resin. At this time, it is preferred that the lubricant is a fatty acid ester of polyol, and particularly preferred that it is glycerin monostearate.

Further, the problem is solved by providing a method of producing a polyvinyl chloride resin composition, comprising adding: from 0.005 to 5 parts by weight of a vinyl alcohol-based polymer containing from 0.5 to 18 mol% of an ethylene unit and having a degree of saponification of a vinyl acetate unit of from 30 to 99.9 mol%; and from 0.01 to 5 parts by weight of a zinc compound, based on 100 parts by weight of a polyvinyl chloride resin to the polyvinyl chloride resin.

At this time, in the production method, it is preferred to further comprises adding from 0.001 to 10 parts by weight of a lubricant based on 100 parts by weight of the polyvinyl chloride resin.

Hereinafter, a vinyl alcohol-based polymer may be abbreviated as a PVA. A vinyl alcohol-based polymer containing an ethylene unit may be abbreviated as an ethylene-modified PVA. Further, an ethylene-modified PVA together may be abbreviated simply as modified PVAs.

EFFECTS OF THE INVENTION

In a case of using the resin composition of the present invention, it is possible to achieve effects of being good in thermal stability while being shaped and of a shaped article thereof being less colored.

MODE FOR CARRYING OUT THE INVENTION

As a material to produce a polyvinyl chloride resin used for the present invention, as well as a vinyl chloride monomer, a mixture having a vinyl chloride monomer as a main component and a monomer that is copolymerizable therewith (50 weight% or more of the vinyl chloride monomer) is used. The monomer copolymerized with the vinyl chloride monomer may include vinyl esters, such as vinyl acetate and vinyl propionate, acrylic esters or methacrylic esters, such as methyl acrylate and ethyl acrylate, olefins, such as ethylene and propylene, maleic anhydride, acrylonitrile, styrene and vinylidene chloride .

As a method of producing the polyvinyl chloride resin using these monomers, it is possible to preferably employ a method of suspension polymerizing the monomer in the presence of polymerization initiator. In such a case, a normally used dispersion stabilizer is used that is, for example, a water soluble polymer, such as a water soluble cellulose ether, like methylcellulose, hydroxyethyl cellulose, hydroxypropyl cellulose and hydroxypropyl methylcellulose, polyvinyl alcohol, and gelatin; an oil soluble emulsifier, such as sorbitan monolaurate, sorbitan trioleate, glycerin tristearate, and an ethylene oxide-propylene oxide block copolymer; a water soluble emulsifier, such as polyoxyethylene sorbitan monolaurate, polyoxyethylene glycerin oleate, and sodium laurate. Among them, polyvinyl alcohol having a degree of saponification of from 65 to 99 mol% and having a degree of polymerization of from 500 to 4000 is preferably used, which is added preferably from 0.01 to 2.0 parts by weight to 100 parts by weight of vinyl chloride. The dispersion stabilizer for suspension polymerization may be used singly, and a polyvinyl alcohol-based polymer having a degree of polymerization of from 100 to 4000 and having a degree of saponification of from 30 to 99 mol%, which is normally used for suspension polymerizing a vinyl-based compound, such as vinyl chloride, in an aqueous medium used preferably. Although the amount thereof to be added is not particularly limited, it is preferred to be from 0.01 to 2.0 parts by weight to 100 parts by weight of a vinyl-based compound, such as vinyl chloride.

As the initiator used for polymerization, an oil soluble or water soluble polymerization initiator can be used that has been used for polymerization of a vinyl chloride monomer conventionally. The oil soluble polymerization initiator may include, for example, percarbonate compounds, such as diisopropyl peroxydicarbonate, di-2-ethylhexyl peroxydicarbonate, and diethoxyethyl peroxydicarbonate; perester compounds, such as t-butyl peroxyneodecanoate, t-butyl peroxypivalate, t-hexyl peroxypivalate, and $\alpha$-cumyl peroxyneodecanoate; peroxides, such as acetyl cyclohexyl sulfonyl peroxide, 2,4,4-trimethylpentyl-2-peroxyphenoxyacetate, 3,5,5-trimethyl hexanoyl peroxide, and lauroyl peroxide; and azo compounds, such as azobis-2,4-dimethylvaleronitrile and azobis (4-2, 4-dimethylvaleronitrile). The water soluble polymerization initiator may include, for example, potassium persulfate, ammonium persulfate, hydrogen peroxide and cumene hydroperoxide. These oil soluble or water soluble polymerization initiators can be used singly or in combination of two or more types.

Upon polymerization, it is possible to add various other additives to the polymerization reaction system as needed. The additives may include, for example, polymerization regulators, such as aldehydes, halogenated hydrocarbons, and mercaptans, and polymerization inhibitors, such as a phenol compound, a sulfur compound, and an N-oxide compound. In addition, it is also possible to arbitrarily add a pH adjuster and a crosslinker.

Upon polymerization, the polymerization temperature is not particularly limited and it can also be adjusted to a low temperature at approximately 20°C as well as a high temperature at over 90°C. It is also one of preferred embodiments to use a polymerization vessel with a reflux condenser to enhance the heat removal efficiency of the polymerization reaction system.

For the polymerization, it is possible to arbitrarily add additives, such as antiseptics, mildewcides, antiblocking agents, defoamers, antifouling agents, and antistatics, that are normally used for polymerization as needed.

Next, a description is given to the ethylene-modified PVA used for the invention. The ethylene unit content (may be referred to as a ethylene-modification amount) of the ethylene-modified PVA is from 0. 5 to 18 mol%, and preferably from 1 to 15 mol%. The polyvinyl chloride resin is colored in a case that the ethylene unit content is less than 0.5 mol%, and the long term thermal stability seriously decreases in a case that the ethylene unit content exceeds 18 mol% and thus it is not preferred.

The ethylene unit content is obtained from proton NMR of a polyvinyl ester containing an ethylene unit, which is a precursor of the ethylene-modified PVA. Firstly, the obtained polyvinyl ester is sufficiently purified by reprecipitation with n-hexane/acetone three times or more, followed by drying under reduced pressure at 80°C for three days to create a polyvinyl ester for analysis. Subsequently, the polyvinyl ester is dissolved in DMSO-D6 to measure at 80°C using 500 MHz proton NMR (JEOL GX-500). The ethylene unit content is calculated based on peaks (from 4.7 to 5.2 ppm) derived from main chain methine of the vinyl ester and peaks (from 0.8 to 1. 6 ppm) derived from main chain methylene of the ethylene, the vinyl ester and a third component.

The ethylene-modified PVA contained in the polyvinyl chloride resin composition of the present invention can be contained therein by, for example, being added to the polyvinyl chloride resin after polymerizing to obtain a polyvinyl chloride resin. The modified PVA can be added in powder or by being dissolved in water or an organic solvent to the polyvinyl chloride resin. As the modified PVA is added when polymerizing to obtain the polyvinyl chloride resin, the modified PVA acts as a dispersant for the polyvinyl chloride resin, so that it may influence, or sometimes may affect, the quality of the polyvinyl chloride resin thus obtained, such as the average particle diameter and the plasticizer absorbency.

The ethylene-modified PVA has a degree of saponification of a vinyl acetate unit of from 30 to 99.9 mol%, preferably from 35 to 98.5 mol%, and particularly preferably from 40 to 96 mol%. In a case of the degree of saponification of less than 30 mol%, the long term thermal stability seriously decreases and thus it is not preferred. The degree of saponification of a vinyl acetate unit means a degree of saponification of a vinyl acetate unit eliminating copolymer units, such as an ethylene unit, from each unit of the ethylene-modified PVA, and the degree of saponification of the PVA is a value measured in accordance with JIS K6726.

The ethylene-modified PVA has a viscosity average degree of polymerization (hereinafter, may be referred to simply as a degree of polymerization) of from 50 to 3000, preferably from 100 to 2800, and particularly preferably from 150 to 2500. When the viscosity average degree of polymerization is less than 50, it is not preferred from the perspective of production of the ethylene-modified PVA. When the viscosity average degree of polymerization exceeds 3000, the long term thermal stability seriously decreases and thus it is not preferred.

The viscosity average degree of polymerization of the ethylene-modified PVA is a value measured in accordance with JIS K6726. That is, it can be obtained by the following expression using limiting viscosity $[\eta]$ that is measured in water at 30°C after resaponifying the modified PVA to a degree of saponification of 99.5 mol% or more and purifying it.

$$\texttt{Viscosity Average Degree of Polymerization} =$$

$$([\eta] \times 1000/8.29)^{(1/0.62)}$$

In the present invention, the modified PVA may be used singly or may also be used by mixing two or more types having different properties.

The modified PVA can be produced by polymerizing a vinyl ester-based monomer with ethylene by employing a conventionally known process, such as bulk polymerization, solution polymerization, suspension polymerization, emulsion polymerization, and dispersion polymerization, and saponifying the vinyl ester-based polymer thus obtained. Polymerization processes preferred from the industrial perspective are solution polymerization, emulsion polymerization, and dispersion polymerization. For the polymerization operation, any polymerization system can be employed among batch process, semi-batch process, and continuous process.

The vinyl ester-based monomer allowed to be used for the polymerization may include, for example, vinyl acetate, vinyl formate, vinyl propionate, vinyl caprylate and vinyl versatate , and among them, vinyl acetate is preferred from the industrial perspective.

In the ethylene-modified PVA, upon copolymerization of ethylene and the vinyl ester-based monomer, it is allowed to further copolymerize another monomer other than ethylene . Monomers that can be used may include, for example, α-olefins, such as propylene, n-butene, and isobutylene; acrylic acid and a salt thereof, acrylic acid esters, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and a salt thereof; methacrylic acid esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives, such as acrylamide, N-methylacrylamide, N-ethylacrylamide, N,N-dimethylacrylamide, diacetone acrylamide, acrylamide propanesulfonic acid and a salt thereof, acrylamide propyl dimethylamine and a salt thereof or a quaternary salt thereof, and N-methylolacrylamide and a derivative thereof; methacrylamide derivatives, such as methacrylamide, N-methyl methacrylamide, N-ethyl methacrylamide, methacrylamide propanesulfonic acid and a salt thereof, methacrylamide propyl dimethylamine and a salt thereof or a quaternary salt thereof, and N-methylolmethacrylamide and a derivative thereof; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate and allyl chloride; unsaturated dicarboxylic acids, such as maleic acid, itaconic acid, and fumaric acid, and salts thereof or esters thereof; vinyl silyl compounds, such as vinyl trimethoxysilane; and isopropenyl acetate.

Upon the polymerization, for the purpose of adjustment of the degree of polymerization of the modified PVA thus obtained, a chain transfer agent is allowed to coexist. The chain transfer agent may include aldehydes, such as acetaldehyde, propionaldehyde, butylaldehyde, and benzaldehyde; ketones, such as acetone, methyl ethyl ketone, hexanone, and cyclohexanone; mercaptans, such as 2-hydroxy ethanethiol and dodecyl mercaptan; and halogenated hydrocarbons, such as trichloroethylene and perchloroethylene, and among all, aldehydes and ketones are used preferably. Although the amount of the chain transfer agent to be added is determined according to the chain transfer constant of the chain transfer agent to be added and the intended degree of polymerization of the modified PVA, it is generally desired to be from 0.1 to 10 weight% to the vinyl ester-based monomer.

In the present invention, it is also possible to use a modified PVA having a high content of 1,2-glycol bond that is obtained by polymerizing the vinyl ester-based monomer at a temperature condition higher than normal polymerization. In this case, the content of 1, 2-glycol bond is preferably 1. 9 mol% or more, more preferably 2.0 mol% or more, and even more preferably 2.1 mol% or more.

To the saponification reaction of the vinyl ester-based polymer, an alcoholysis or hydrolysis reaction can be applied using conventionally known basic catalysts, such as sodium hydroxide, potassium hydroxide, and sodium methoxide, or acid catalysts, such as p-toluenesulfonic acid. The solvent used for the saponification reaction may include alcohols, such as methanol and ethanol; esters, such as methyl acetate and ethyl acetate; ketones, such as acetone and methyl ethyl ketone; and aromatic hydrocarbons, such as benzene and toluene, and they can be used singly or in combination of two or more types. Among all, it is preferred for the convenience to carry out a saponification reaction using a methanol or mixed solution of methanol and methyl acetate as the solvent in the presence of sodium hydroxide as the basic catalyst.

The modified PVA contained in the polyvinyl chloride resin composition is from 0.005 to 5 parts by weight based on 100 parts by weight of the polyvinyl chloride resin, and preferably from 0.04 to 3 parts by weight. The long term thermal stability is not sufficient in a case of less than 0.005 parts by weight, and in a case of exceeding 5 parts by weight, the polyvinyl chloride resin is colored and it is not preferred.

In a case of adding the modified PVA used for the present invention when polymerizing to obtain the polyvinyl chloride resin, most of the modified PVA is removed by washing of the polyvinyl chloride resin after producing the resin, so that the content of the modified PVA in the polyvinyl chloride resin composition becomes less than 0.005 parts by weight and thus the effect as a thermostabilization aid is not obtained.

In the present invention, the modified PVA may also contain an acid having pKa at 25°C of from 3.5 to 5.5 and/or a metal salt thereof. The type of the acid is not particularly limited, and the specific examples may include acetic acid (pKa of 4.76), propionic acid (pKa of 4.87), butyric acid (pKa of 4.63), octanoic acid (pKa of 4.89), adipic acid (pKa of 5.03), benzoic acid (pKa of 4.00), formic acid (pKa of 3.55), valeric acid (pKa of 4.63), heptanoic acid (pKa of 4.66), lactic acid (pKa of 3.66), phenylacetic acid (pKa of 4.10), isobutyric acid (pKa of 4.63) and cyclohexanecarboxylic acid (pKa of 4.70) . Particularly preferably used acids are acetic acid, propionic acid, and lactic acid. It is also possible to use metal salts of the acids above. Although the type of the metal salt is not particularly limited, a salt of alkali metal, such as sodium, potassium, magnesium, or calcium, is normally used.

The acid having pKa of from 3.5 to 5.5 and/or a metal salt thereof is preferably contained at a ratio of from 0.05 to 5 parts by weight based on 100 parts by weight of the modified PVA, more preferably from 0.1 to 3 parts by weight, and even more preferably from 0.15 to 2 parts by weight. The long term thermal stability decreases in a case that the acid and/or a metal salt thereof is contained less than 0.05 parts by weight to the modified PVA, and in a case of exceeding 5 parts by weight, there is a possibility that the polyvinyl chloride resin is colored.

The method of containing the acid and/or a metal salt thereof in a predetermined amount is not particularly specified and may include, for example, a method of adjusting the type and the amount of the alkali catalyst used for the saponification when producing the modified PVA, a method of adding or removing the acid and/or a metal salt thereof after producing the modified PVA.

The zinc compound used in the present invention may include aliphatic carboxylates of zinc, such as zinc stearate, zinc laurate, and zinc oleate, aromatic carboxylic acid zinc, such as zinc benzoate and zinc p-tert butyl benzoate, zinc salts of an organic acid, such as an amino acid zinc salt and a phosphate zinc salt and inorganic zinc salts, such as zinc oxide and zinc carbonate. The zinc compound is added from 0.01 to 5 parts by weight based on 100 parts by weight of the polyvinyl chloride resin, and preferably from 0.05 to 3 parts by weight. The sufficient thermal stability effect is not obtained in a case of being added in the amount of less than 0.01 parts by weight, and in a case of exceeding 5 parts by weight, a shaped article of the vinyl chloride resin composition is blackened and thus it is not preferred. The zinc compound can be contained by adding it to the polyvinyl chloride resin after polymerizing to obtain a polyvinyl chloride resin.

Together with the polyvinyl chloride resin composition of the present invention, it is possible to use stabilizers, phenolic antioxidants, phosphorous antioxidants, light stabilizers, ultraviolet absorbers, antifog agents, antistatics, flame retardants, lubricants, modifiers, reinforcements, pigments, blowing agents and plasticizers that are normally used. To the polyvinyl chloride resin composition of the present invention, another resin may also be mixed as long as not impairing the mechanical properties.

The lubricants may include hydrocarbons, such as liquid paraffin, natural paraffin, micro wax, and polyethylene wax; fatty acids, such as stearic acid and lauric acid; fatty acid amides, such as stearic amide, palmitic amide, methylenebisstearoamide, and ethylenebisstearoamide; fatty acid esters of monoalcohol, such as butyl stearate; fatty acid esters of polyol, such as hydrogenated castor oil, ethylene glycol monostearate, glycerin monostearate, and triethylene glycol di-2-ethyl hexanoate; alcohols, such as cetyl alcohol and stearyl alcohol. Among all, in a case of using a fatty acid ester of polyol, the effect of the present invention is exhibited even more. At this time, it is preferred to be a fatty acid monoester of polyol and also preferred to be a fatty acid ester of glycerin. In addition, the fatty acid of the fatty acid ester preferably has a carbon number of from 8 to 22 and is even more preferably a stearic acid ester. Among them, glycerin monostearate is particularly preferred. The lubricant is added preferably from 0.001 to 10 parts by weight based on 100 parts by weight of the polyvinyl chloride resin, and even more preferably from 0.05 to 5 parts by weight.

As the stabilizer, well known ones can be used and they may specifically include organic metal salts, such as soap of alkaline earth metals, like calcium soap and barium soap, aluminum soap, and organic phosphoric acid metal salts; inorganic metal salts, such as metal oxide, metal hydroxide, metal carbonate, and inorganic complex metal salts, like zeolite; halogen oxy acid salts, such as barium chlorate, barium perchlorate, and sodium perchlorate; and non-metallic stabilizers, such as β-diketone, polyol, and epoxy compounds.

The plasticizer may include, for example, ester-based plasticizers, such as an ester of an acid, like phthalic acid, trimellitic acid, pyromellitic acid, adipic acid, sebacic acid, and azelaic acid, and a single linear or branched alkyl alcohol, or a mixture thereof, like n-propanol, isopropanol, n-butanol, isobutanol, tert-butanol, n-pentanol, isopentanol, tert-pentanol, n-hexanol, isohexanol, n-heptanol, isoheptanol, n-octanol, isooctanol, 2-ethylhexanol, n-nonanol, isononanol, n-decanol, isodecanol, lauryl alcohol, myristyl alcohol, palmityl alcohol, and stearyl alcohol, and an ester of butanediol and adipic acid; epoxy-based plasticizers, such as epoxidized soybean oil, epoxidized linseed oil, epoxidized castor oil, epoxidized linseed oil fatty acid butyl, octyl epoxy stearate, epoxy triglyceride, diisodecyl epoxy-hexahydrophthalate, or a low molecular weight reaction product resin of bisphenol A with epichlorohydrin; and phosphate-based plasticizers, such as tricresyl phosphate, trixylenyl phosphate, monobutyl dixylenyl phosphate, and trioctyl phosphate.

The phenolic antioxidant may be any of those used normally, and may include, for example, 2,6-ditertiary butyl-p-cresol, 2,6-diphenyl-4-octadecyloxyphenol, stearyl(3,5-ditertiary butyl-4-hydroxyphenyl)-propionate, distearyl(3,5-ditertiary butyl-4-hydroxybenzyl)phosphonate, thiodiethylene glycol bis[(3,5-ditertiary butyl-4-hydroxyphenyl)propionate], 1,6-hexamethylene bis[(3,5-ditertiary butyl-4-hydroxyphenyl)propionate], 1,6-hexamethylene bis[(3,5-ditertiary butyl-4-hydroxyphenyl)propionic acid amide], 4,4'-thiobis(6-tertiary butyl-m-cresol), 2,2'-methylene bis(4-methyl-6-tertiary butylphenol), 2,2'-methylene bis(4-ethyl-6-tertiary butylphenol), bis[3,3-bis(4-hydroxy-3-tertiary butylphenyl)butyric acid]glycol ester, 2,2'-ethylidene bis(4,6-ditertiary butylphenol), 2,2' ethylidene bis(4-secondary butyl-6-tertiary butylphenol), 1,1,3-tris(2-methyl-4-hydroxy-5-tertiary butylphenyl)butane, bis[2-tertiary butyl-4-methyl-6-(2-hydroxy-3-tertiary butyl-5-methylbenzyl)phenyl]terephthalate,    1,3,5-tris(3,5-ditertiary    butyl-4-hydroxybenzyl)-2,4,6-trimethylbenzene,    1,3,5-tris[(3,5-ditertiary butyl-4-hydroxyphenyl)propionyloxyethyl]isocyanurate, tetrakis[methylene-3-(3,5-ditertiary butyl-4-hydroxyphenyl)propionate]methane, 2 tertiary butyl-4-methyl-6-(2-acryloyloxy-3-tertiary butyl-5-methylbenzyl)phenol, 3,9-bis[1,1-dimethyl-2-{(3-tertiary    butyl-4-hydroxy-5-methylphenyl)propionyloxy}ethyl]-2,4,8,10  -tetraoxaspiro[5.5]undecane, and triethylene glycol bis[(3-tertiary butyl-4-hydroxy-5-methylphenyl)propionate]. The phenolic antioxidant is added preferably from 0.01 to 5 parts by weight based on 100 parts by weight of the polyvinyl chloride resin, and even more preferably from 0.1 to 3 parts by weight.

The phosphorous antioxidant may be any of those used normally, and may include, for example, trisnonylphenyl phosphite, tris(2,4-ditertiary butylphenyl)phosphite, tris[2-tertiary butyl-4-(3-tertiary butyl-4-hydroxy-5-methylphenylthio)-5-methylphenyl]phosphit e, tridecyl phosphite, octyl diphenyl phosphite, di(decyl) monophenyl phosphite, di(tridecyl) pentaerythritol diphosphite, distearyl pentaerythritol diphosphite, di(nonylphenyl)pentaerythritol diphosphite, bis(2,4-ditertiary butylphenyl)pentaerythritol diphosphite, bis(2,6-ditertiary butyl-4-methylphenyl)pentaerythritol diphosphite, bis (2,4,6-tritertiary butylphenyl)pentaerythritol diphosphite, tetra(tridecyl)isopropylidenediphenol diphosphite, tetra(tridecyl)-4,4'-n-butylidenebis(2-tertiary butyl-5-methylphenol)diphosphite, hexa(tridecyl)-1,1,3-tris(2-methyl-4-hydroxy-5-tertiary butylphenyl)butane triphosphite, tetrakis(2,4-ditertiary butylphenyl)biphenylene diphosphonite, 9,10-dihydro-9-oxa-10-phosphaphenanthrene-10-oxide, and 2,2'-methylenebis(4-methyl-6-tertiary butylphenyl)-2-ethylhexyl phosphite. The phosphorous antioxidant is added preferably from 0. 001 to 5 parts by weight based on 100 parts by weight of the polyvinyl chloride resin, and even more preferably from 0.005 to 3 parts by weight.

The ultraviolet absorber may include, for example, 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl) benzotriazoles, such as 2-(2-hydroxy-5-tertiary octylphenyl)benzotriazole, 2-(2-hydroxy-3,5-ditertiary butylphenyl)-5-chlorobenzotriazole, 2-(2-hydroxy-3-tertiary butyl-5-methylphenyl)-5-chlorobenzotriazole, 2-(2-hydroxy-3,5-dicumylphenyl)benzotriazole, 2,2'-methylenebis(4-tertiary octyl-6-benzotriazolyl) phenol, and a polyethylene glycol ester of 2-(2-hydroxy-3-tertiary butyl-5-carboxyphenyl)benzotriazole; benzoates, such as phenyl salicylate resorcinol monobenzoate, 2,4-ditertiary butylphenyl-3,5-ditertiary butyl-4-hydroxybenzoate, and hexadecyl-3,5-ditertiary butyl-4-hydroxybenzoate; substituted oxanilides, such as 2-ethyl-2'-ethoxyoxanilide, and 2-ethoxy-4'-dodecyloxanilide; and cyanoacrylates, such as ethyl-$\alpha$-cyano-$\beta,\beta$-diphenylacrylate and methyl-2-cyano-3-methyl-3-(p-methoxyphenyl)acrylate. The ultraviolet absorber is added preferably from 0.005 to 10 parts by weight based on 100 parts by weight of the vinyl chloride, and even more preferably from 0.01 to 5 parts by weight.

The light stabilizer may include, for example, hindered amine compounds, such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetracarboxy late, tetrakis(1,2,2,6,6-pentamethyl-4-piperidyl)butanetetracarbo xylate, bis(1,2,2,6,6-pentamethyl-4-piperidyl) di(tridecyl) -1,2,3,4-butanetetracarboxylate, bis(1,2,2,6,6-pentamethyl-4-hydroxybenzyl)malonate, a 1-(2-hydroxyethyl)-2,2,6,6-tetramethyl-4-piperidinol/diethy l succinate polycondensation product, a 1,6-bis(2,2,6,6-tetraethyl-4-piperidylamino)hexane/dibromoe thane polycondensation product, a 1,6-bis(2,2,6,6-tetramethyl-4-piperidylamino) hexane/2,4-dic hloro-6-morpholino-s-triazine polycondensation product, a 1,6-bis(2,2,6,6-tetramethyl-4-piperidylamino) hexane/2,4-dic hloro-6-tertiary octylamino-s-triazine polycondensation product, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperi dyl)amino)-s-triazine-6-ylamino]undecane, and 1,6,11-tris[2,4-bis(N-butyl-N-(1,2,2,6,6-pentamethyl-4-pipe ridyl)amino)-s-triazine-6-ylamino]undecane. The light stabilizer is added preferably from 0.001 to 5 parts by weight based on 100 parts by weight of the polyvinyl chloride resin, and even more preferably from 0.05 to 3 parts by weight.

A method of processing the polyvinyl chloride resin composition of the present invention may include extrusion processing, calender processing, blow molding, press processing, powder molding and injection molding.

Examples

The present invention is described below by way of Examples further in detail. In Examples and Comparative Examples below, parts and % denote parts by weight and weight%, respectively, unless otherwise specified.

Example 1

(Production of Polyvinyl Chloride Resin)

Polyvinyl alcohol, having a degree of polymerization of 850 and having a degree of saponification of 72 mol%, in an amount equivalent to 600 ppm with respect to vinyl chloride was dissolved in deionized water to prepare a dispersion stabilizer. The dispersion stabilizer thus obtained was charged in a glass-lined autoclave on which an antifouling agent, NOXOL WSW (produced by CIRS) was applied so as to have a solid content of 0.3 g/m$^2$. Subsequently, 0.04 parts of a 70% toluene solution of diisopropyl peroxydicarbonate was charged in the glass-lined autoclave, and after removing oxygen by degassing until the pressure in the autoclave becomes 0.0067 MPa, 30 parts of vinyl chloride was charged therein and the contents in the autoclave were raised in temperature to 57°C while being stirred to initiate polymerization. The pressure in the autoclave when initializing the polymerization was 0.83 MPa. After seven hours since the initiation of polymerization, the polymerization is terminated at the time of the pressure in the autoclave being 0.44 MPa, and unreacted vinyl chloride was removed, followed by taking the polymerization reaction product out to dry it at 65°C overnight, and thus a polyvinyl chloride resin (PVC) was obtained.

Example 7

(Production of Ethylene-Modified PVA)

In a 100 L pressure reaction vessel provided with a stirrer, a nitrogen inlet port, an ethylene inlet port, and an initiator addition port, 26.4 kg of vinyl acetate and 33.5 kg of methanol were charged and were raised in temperature to 60°C, followed by purging inside the system with nitrogen by nitrogen bubbling for 30 minutes. Subsequently, ethylene was introduced so as to make the reaction vessel pressure to be 0.22 MPa. As an initiator, a 2.8 g/L concentration solution in which 2,2'-azobis(4-methoxy-2,4-dimethylvaleronitrile) was dissolved in methanol was prepared and was purged with nitrogen by bubbling with a nitrogen gas. After adjusting the temperature within the reaction vessel at 60°C, 77 ml of the initiator solution was poured thereto to initiate polymerization. The reaction vessel pressure was maintained at 0.22 MPa by introducing ethylene and the polymerization temperature at 60°C during the polymerization, and the initiator solution was continuously added at 241 mL/hr. It was cooled after five hours when the polymerization conversion reached 60% to terminate the polymerization. After deethylenizing by opening the reaction vessel, a nitrogen gas was bubbled to completely deethylenize. Subsequently, the unreacted vinyl acetate monomer was removed under reduced pressure to obtain a methanol solution of an ethylene-polyvinyl acetate copolymer (ethylene-modified PVAc). A methanol solution of NaOH (10% concentration) was added to the solution adjusted to 30% so as to make the alkali molar ratio (mole number of NaOH/mole number of vinyl ester unit in modified PVAc) to become 0.01 for saponification. The ethylene-modified PVA thus obtained had a degree of saponification of 90 mol%.

After three times of purification by reprecipitation, in which the methanol solution of ethylene-modified PVAc obtained by removing an unreacted vinyl acetate monomer after polymerization was put in n-hexane to precipitate ethylene-modified PVAc and the recovered ethylene-modified PVAc was dissolved with acetone, it was dried under reduced pressure at 60°C and a purified product of ethylene-modified PVAc was obtained. The ethylene unit content obtained from proton NMR measurement of the ethylene-modified PVAc was 5 mol%. A methanol solution of the ethylene-modified PVAc was saponified at an alkali molar ratio of 0.2, followed by soxhlet extraction with methanol for three days; and subsequently, it was dried to obtain a purified product of the ethylene-modified PVA. The viscosity average degree of polymerization of the ethylene-modified PVA was 400 that was measured in accordance with an ordinary method of JIS K6726.

(Thermal Stability Test)

To 100 parts by weight of the polyvinyl chloride resin obtained in the same manner as Example 1, an ethylene-modified PVA solution was added using a 1% concentration water/methanol mixed solution (= 1/1 weight ratio) of ethylene-modified PVA to make it an amount shown in Table 2, and was dried at 50°C for eight hours by a vacuum dryer. To the polyvinyl chloride resin composition, 2 parts by weight of zinc stearate, 1 part by weight of calcium stearate, and 20 parts by weight of dioctyl phthalate were mixed. The polyvinyl chloride resin composition was kneaded at 160°C for five minutes with a test roll to fabricate a sheet having a thickness of 0.45 mm. The sheet was cut into 50 × 70 mm. The sheet pieces were put into a gear oven, and the time period until they were completely blackened at a temperature of 180°C was measured to make it an index of the thermal stability.

(Colorability Test)

The sheet obtained from the test roll was cut into 45 × 30 mm, and several sheet pieces thus obtained were stacked and pressed at 185°C for five minutes to fabricate a test piece having a thickness of 5 mm, and the colorability was compared visually and determined in accordance with the following standards.

A: almost not colored
B: slightly colored
C: yellowed
D: yellow-browned

Examples 8 through 15

In the same method as Example 7 other than modifying the weights of the charged vinyl acetate and methanol and the pressure of ethylene in the reaction vessel upon polymerization and modifying the alkali molar ratio for saponification, an ethylene-modified PVA shown in Table 2 was obtained. The thermal stability and the colorability were evaluated in the same way as Example 7. The results of evaluation are shown in Table 2.

Examples 16 through 19

They are examples of adding 1 part by weight of glycerin monostearate, as a lubricant, based on 100 parts by weight of the polyvinyl chloride resin. It was mixed in the same way as Example 7 in a formula shown in Table 2, and the thermal stability and the transparency were evaluated. The results of evaluation are shown in Table 2.

Comparative Examples 7, 8

In the same method as Example 7 other than modifying the weights of the charged vinyl acetate and methanol and the pressure of ethylene in the reaction vessel upon polymerization and modifying the alkali molar ratio for saponification, an ethylene-modified PVA shown in Table 2 was obtained. The thermal stability and the transparency were evaluated in the same way as Example 7. The results of evaluation are shown in Table 2. Any of them were not sufficient in the thermal stability.

Comparative Example 9

In the same method as Example 7 other than modifying the weights of the vinyl acetate and methanol charged upon polymerization and not using ethylene, a PVA shown in Table 2 was obtained. The thermal stability and the transparency were evaluated in the same way as Example 7. The results of evaluation are shown in Table 2. It was colored in yellow.

Comparative Example 10

In the same method as Example 7 other than modifying the alkali molar ratio upon saponification, an ethylene-modified PVA shown in Table 2 was obtained. The thermal stability and the transparency were evaluated in the same way as Example 7. The results of evaluation are shown in Table 2. The thermal stability was not sufficient and it was colored in yellow.

Comparative Examples 11, 12

In the same method as Example 7 other than modifying the amount of the ethylene-modified PVA blended therein relative to the polyvinyl chloride resin (PVC), a modified PVA shown in Table 2 was obtained. The thermal stability and the transparency were evaluated in the same way as Example 7. The results of evaluation are shown in Table 2. The thermal stability was not sufficient in a case of blending the ethylene-modified PVA too little, and it was colored in yellow seriously in a case of blending too much.

Comparative Example 13

In the same way as Example 7 other than not adding the ethylene-modified PVA to the polyvinyl chloride resin, the thermal stability and the transparency were evaluated. The results of evaluation are shown in Table 2. The thermal stability was not sufficient.

Comparative Examples 14, 15

In the same way as Example 7 other than modifying the amount of zinc stearate blended therein as shown in Table 2, the thermal stability and the colorability were evaluated. The results of evaluation are shown in Table 2. Any of them were insufficient in the thermal stability and the sheets were colored.

Comparative Examples 16 through 19

They are examples of adding 1 part by weight of glycerin monostearate, as a lubricant, based on 100 parts by weight of the polyvinyl chloride resin. It was mixed in the same way as Example 7 in a formula shown in Table 2, and the thermal stability and the transparency were evaluated. The results of evaluation are shown in Table 2.
[Table 2]

| | Ethylene-modified PVA *2 | | Evaluation Conditions and Results | | | | |
|---|---|---|---|---|---|---|---|
| | Ethylene-Modification Amount (mol%) | Degree of Saponification (mol%) | PVA (parts/PVC 100 parts) | Zinc Compound *1 (parts/PVC 10a parts) | Glycerin Monostearate (parts/PVC 100 parts) | Time Period to be Blackened (min) | Colorability |
| Example 7 | 5 | 90 | 1.5 | 2 | 0 | 180 | A |
| Example 8 | 5 | 98.5 | 1.5 | 2 | 0 | 160 | A |
| Example 9 | 5 | 35 | 1.5 | 2 | 0 | 140 | B |
| Example 10 | 5 | 30 | 1.5 | 2 | 0 | 120 | B |
| Example 11 | 1 | 90 | 1.5 | 2 | 0 | 180 | A |
| Example 12 | 0.5 | 90 | 1.5 | 2 | 0 | 180 | B |
| Example 13 | 18 | 90 | 1.5 | 2 | 0 | 140 | A |
| Example 14 | 10 | 90 | 1.5 | 2 | 0 | 180 | A |
| Example 15 | 15 | 90 | 1.5 | 2 | 0 | 160 | A |
| Example 16 | 5 | 90 | 1.5 | 2 | 1 | 200 | A |
| Example 17 | 5 | 98.5 | 1.5 | 2 | 1 | 180 | A |
| Example 18 | 5 | 35 | 1.5 | 2 | 1 | 160 | A |
| Example 19 | 5 | 30 | 1.5 | 2 | 1 | 140 | A |
| Comparative Example 7 | 38 | 99.5 | 1.5 | 2 | 0 | 75 | B |
| Comparative Example 8 | 25 | 90 | 1.5 | 2 | 0 | 90 | B |
| Comparative Example 9 | 0 | 90 | 1.5 | 2 | 0 | 180 | C |
| Comparative Example 10 | 5 | 20 | 1.5 | 2 | 0 | 75 | C |
| Comparative Example 11 | 5 | 90 | 0.002 | 2 | 0 | 60 | A |

EP 2 423 258 B1

| | Ethylene-modified PVA *2 | | Evaluation Conditions and Results | | | | |
|---|---|---|---|---|---|---|---|
| | Ethylene-Modification Amount (mol%) | Degree of Saponification (mol%) | PVA (parts/PVC 100 parts) | Zinc Compound *1 (parts/PVC 10a parts) | Glycerin Monostearate (parts/PVC 100 parts) | Time Period to be Blackened (min) | Colorability |
| Comparative Example 12 | 5 | 90 | 15 | 2 | 0 | 190 | D |
| Comparative Example 13 | - | - | 0 | 2 | 0 | 60 | A |
| Comparative Example 14 | 5 | 90 | 1.5 | 0.001 | 0 | 55 | D |
| Comparative Example 15 | 5 | 90 | 1.5 | 10 | 0 | 65 | D |
| Comparative Example 16 | 38 | 99.5 | 1.5 | 2 | 1 | 90 | B |
| Comparative Example 17 | 25 | 90 | 1.5 | 2 | 1 | 100 | B |
| Comparative Example 18 | 0 | 90 | 1.5 | 2 | 1 | 190 | C |
| Comparative Example 19 | 5 | 20 | 1.5 | 2 | 1 | 90 | B |

*1) Zinc Stearate
*2) Viscosity Average Degree of Polymerization was 400

EP 2 423 258 B1

**Claims**

1. A polyvinyl chloride resin composition comprising:

   from 0.005 to 5 parts by weight of a vinyl alcohol-based polymer containing from 0.5 to 18 mol% of an ethylene unit and having a degree of saponification of a vinyl acetate unit of from 30 to 99.9 mol%; and from 0.01 to 5 parts by weight of a zinc compound, based on 100 parts by weight of a polyvinyl chloride resin.

2. The polyvinyl chloride resin composition according to claim 1, wherein the vinyl alcohol-based polymer and the zinc compound are contained therein by adding them to the polyvinyl chloride resin.

3. A method of producing a polyvinyl chloride resin composition, comprising adding: from 0.005 to 5 parts by weight of a vinyl alcohol-based polymer containing from 0.5 to 18 mol% of an ethylene unit and having a degree of saponification of a vinyl acetate unit of from 30 to 99.9 mol%; and from 0.01 to 5 parts by weight of a zinc compound, based on 100 parts by weight of a polyvinyl chloride resin to the polyvinyl chloride resin.

4. The polyvinyl chloride resin composition according to claim 1 or 2, further comprising from 0.001 to 10 parts by weight of a lubricant based on 100 parts by weight of the polyvinyl chloride resin.

5. The polyvinyl chloride resin composition according to claim 4, wherein the lubricant is a fatty acid ester of polyol.

6. The polyvinyl chloride resin composition according to claim 5, wherein the fatty acid ester of polyol is glycerin monostearate.

7. The method of producing a polyvinyl chloride resin composition according to claim 3, further comprising adding from 0.001 to 10 parts by weight of a lubricant based on 100 parts by weight of the polyvinyl chloride resin.


**Patentansprüche**

1. Polyvinylchloridharzzusammensetzung, umfassend: von 0,005 bis 5 Gew.-Teile eines Polymers auf Vinylalkohol-Basis, enthaltend von 0,01 bis 15 Mol-% einer Monomereinheit mit einer Polyoxyalkylengruppe, ausgedrückt durch eine allgemeine Formel (1), in einer Seitenkette und mit einem Verseifungsgrad von 30 bis 99,9 Mol-%, und von 0,01 bis 5 Gew.-Teile einer Zinkverbindung, basierend auf 100 Gew.-Teilen eines Polyvinylchloridharzes.

2. Polyvinylchloridharzzusammensetzung gemäß Anspruch 1, wobei das Polymer auf Vinylalkohol-Basis und die Zinkverbindung darin durch Zugeben dieser zu dem Polyvinylchloridharz enthalten sind.

3. Verfahren zur Herstellung einer Polyvinylchloridharzzusammensetzung, umfassend das Zugeben: von 0,005 bis 5 Gew.-Teile eines Polymers auf Vinylalkohol-Basis, enthaltend von 0,01 bis 15 Mol-% einer Monomereinheit mit einer Polyoxyalkylengruppe, ausgedrückt durch eine allgemeine Formel (1), in einer Seitenkette und mit einem Verseifungsgrad von 30 bis 99,9 Mol-%, und von 0,01 bis 5 Gew.-Teilen einer Zinkverbindung, basierend auf 100 Gew.-Teilen eines Polyvinylchloridharzes, zu dem Polyvinylchloridharz.

4. Polyvinylchloridharzzusammensetzung gemäß Anspruch 1 oder 2, weiter umfassend von 0,001 bis 10 Gew.-Teilen eines Schmiermittels, bezogen auf 100 Gew.-Teile des Polyvinylchloridharzes.

5. Polyvinylchloridharzzusammensetzung gemäß Anspruch 4, wobei das Schmiermittel ein Fettsäureester von Polyol ist.

6. Polyvinylchloridharzzusammensetzung gemäß Anspruch 5, wobei der Fettsäureester von Polyol Glycerinmonostearat ist.

7. Verfahren zur Herstellung einer Polyvinylchloridharzzusammensetzung gemäß Anspruch 3, weiter umfassend das Zugeben von 0,001 bis 10 Gew.-Teilen eines Schmiermittels, bezogen auf 100 Gew.-Teile des Polyvinylchloridharzes.

**Revendications**

1. Composition de résine de poly(chlorure de vinyle) comprenant :

   de 0,005 à 5 parties en poids d'un polymère à base d'alcool vinylique contenant 0,5 à 18% en moles d'une unité ethylène et ayant un degré de saponification d'une unité d'acetate vinylique allant de 30 à 99,9% en moles ; et 0,01 à 5 parties en poids d'un composé du zinc, sur base de 100 parties en poids d'une résine de poly(chlorure de vinyle).

2. Composition de résine de poly(chlorure de vinyle) selon la revendication 1, où le polymère à base d'alcool vinylique et le composé du zinc sont présents par addition de ceux-ci à la résine de poly(chlorure de vinyle).

3. Procédé de production d'une composition de résine de poly(chlorure de vinyle), comprenant l'addition à la résine de poly(chlorure de vinyle), de 0,005 à 5 parties en poids d'un polymère à base d'alcool vinylique contenant 0,5 à 18% en moles d'une unité ethylène et ayant un degré de saponification d'une unité d'acetate vinylique allant de 30 à 99,9% en moles; et 0,01 à 5 parties en poids d'un composé du zinc, sur base de 100 parties en poids d'une résine de poly(chlorure de vinyle) de la résine de poly(chlorure de vinyle).

4. Composition de résine de poly(chlorure de vinyle) selon la revendication 1 ou 2, comprenant en outre, 0,001 à 10 parties en poids d'un lubrifiant, sur base de 100 parties en poids de la résine de poly(chlorure de vinyle).

5. Composition de résine de poly(chlorure de vinyle) selon la revendication 4, où le lubrifiant est un ester d'acide gras de polyol.

6. Composition de résine de poly(chlorure de vinyle) selon la revendication 5, où l'ester d'acide gras de polyol est le monostéarate de glycérine.

7. Procédé de production d'une composition de résine de poly(chlorure de vinyle) selon la revendication 3, comprenant en outre, l'addition de 0,001 à 10 parties en poids d'un lubrifiant, sur base de 100 parties en poids de la résine de poly(chlorure de vinyle).

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50092947 A
- JP 54081359 A
- JP 57147552 A
- JP 60238345 A
- JP 1178543 A
- JP 6287387 A
- JP 93286A A
- JP 9031281 A
- JP 9003286 A

**Non-patent literature cited in the description**

- *Japanese Journal of Polymer Science and Technology,* 1990, vol. 47 (3), 197
- *Japanese Journal of Polymer Science and Technology,* 1990, vol. 47 (6), 509
- *Japanese Journal of Polymer Science and Technology,* 1993, vol. 50 (2), 65
- *Polymers & Polymer Composites,* 2003, vol. 11, 649
- *Journal of the Adhesion Society of Japan,* 2007, vol. 43 (2), 43